# EUROPÄISCHE PATENTSCHRIFT

(11) **EP 1 067 322 B1**
(45) Veröffentlichungstag und Bekanntmachung des Hinweises auf die Patenterteilung: **03.12.2003**
(21) Anmeldenummer: 00111534.4
(22) Anmeldetag: 30.05.2000
(51) Int. Cl.: F16K 47/10, G05D 7/01, F15B 11/05, F15B 13/04

(54) **Stromregelventil**
Flow regulator valve
Soupage de régulation de débit

(30) Priorität: 16.06.1999 DE 19927392
(43) Veröffentlichungstag der Anmeldung: 10.01.2001
(73) Patentinhaber: ROBERT BOSCH GMBH, 70442 Stuttgart (DE)
(72) Erfinder: Dworak, Wilhelm, 70437 Stuttgart (DE)

(56) Entgegenhaltungen:
- EP-A- 0 174 492
- CH-A- 598 524
- DE-B- 1 034 488
- GB-A- 664 491

## Beschreibung

Die Erfindung geht aus von einem Stromregelventil entsprechend der Gattung des Anspruchs 1. Derartige Stromregelventile werden beispielsweise bei hydraulischen Hebezeugen dazu verwendet, eine Last gebremst abzusenken, ohne daß dabei die Absenkgeschwindigkeit vom Gewicht der Last abhängt. Gleichzeitig sollen derartige Stromregelventile beim Heben der Last einen möglichst geringen Strömungswiderstand bilden, damit dieser Hebevorgang möglichst schnell und ohne Energieverluste erfolgt.

Ein Stromregelventil mit den gattungsbildenden Merkmalen des Anspruchs 1 ist exemplarisch aus der Druckschrift EP-A-0 174 492 bereits bekannt. Dieses bekannte Stromregelventil hat ein topfförmiges Gehäuse mit einem darin entgegen der Kraft einer Feder beweglich angeordneten Ventilkörper zur Steuerung einer Druckmittelverbindung zwischen einer Zulaufbohrung und einer Ablaufbohrung. Im Ventilkörper ist dazu eine Meßblende ausgebildet, deren Druckverlust in Wechselwirkung mit der Gegenkraft der Feder die Relativposition des Ventilkörpers gegenüber der Ablaufbohrung und damit den Druckmittelfluß in die Ablaufbohrung bestimmt. Die Regelblende ist einteilig mit dem Gehäuse als Querschnittsverengung der Ablaufbohrung ausgebildet.

Das bekannte Stromregelventil zeichnet sich unter anderem durch seine gute Regelcharakteristik aus, ist aber relativ aufwendig aufgebaut und daher für manche Anwendungsfälle zu teuer. Zudem weist es ein verhältnismäßig großes Bauvolumen auf.

Demgegenüber weist ein erfindungsgemäßes Stromregelventil mit den kennzeichnenden Merkmalen des Anspruchs 1 den Vorteil auf, daß es kostengünstig herstellbar ist und sehr flach baut. Ein Stromregelventil mit diesen Merkmalen kann für Anwendungen eingesetzt werden, bei denen wenig Bauraum zur Verfügung steht oder bei denen Zugeständnisse bezüglich der Regelcharakteristik zugunsten eines geringen Preises möglich sind.

Das erfindungsgemäße Stromregelventil ist in verschiedenen Bauvarianten realisierbar. Exemplarisch sind drei diesbezüglich besonders vorteilhafte Bauvarianten in den Unteransprüchen 2 bis 4 offenbart. Sie zeichnen sich insbesondere durch ihre geringe Anzahl von Bauelementen, ihre einfache Herstell- und Montierbarkeit und ihre Zuverlässigkeit im Betrieb aus. Als Einbauraum für diese Stromregelventile sind vorhandene Hohlräume im Kontaktierungsbereich von Aggregaten ohne spezielle Anpassungen nutzbar. Weitere Vorteile und vorteilhafte Weiterbildungen der Erfindung ergeben sich aus den übrigen Unteransprüchen und der Beschreibung.

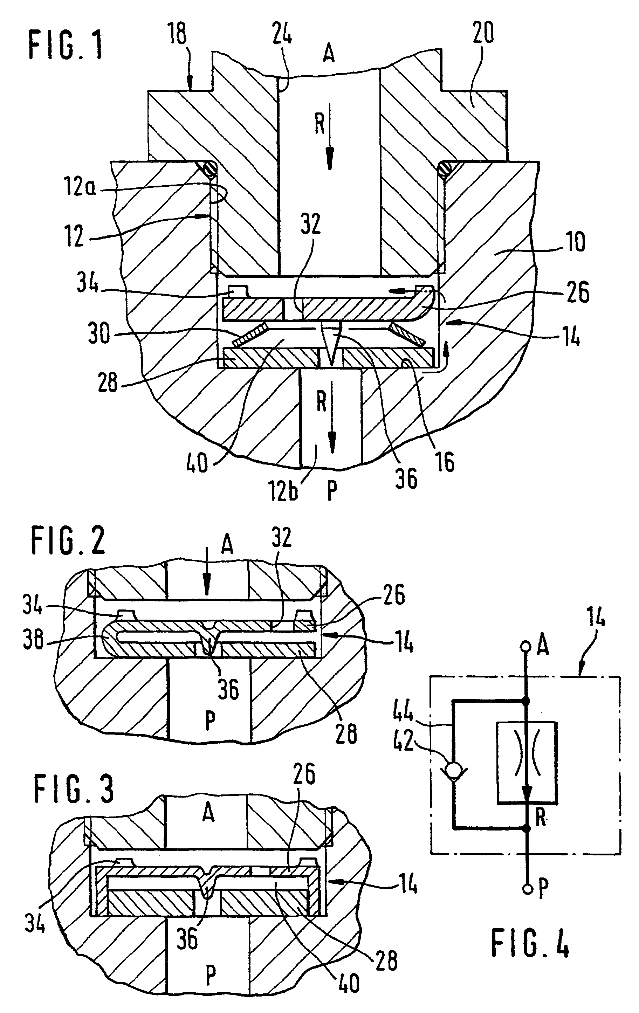

Ausführungsbeispiele der Erfindung sind in der Zeichnung dargestellt und in der nachfolgenden Beschreibung näher erläutert. Die Figuren 1 bis 3 zeigen verschiedene Bauvarianten von Stromregelventilen, jeweils im eingebauten Zustand im Längsschnitt. In Figur 4 ist ein Stromregelventil anhand eines Schaltsymbols vereinfacht dargestellt.

Figur 1 zeigt ein nicht näher spezifiziertes Bauteil 10, das eine Stufenbohrung 12, in die ein Stutzen 18 eingeschraubt ist, aufweist. In die Stufenbohrung 12 ist ein der Erfindung zugrundeliegendes Stromregelventil 14 eingebaut. Die Stufenbohrung 12 weist zwei ineinander übergehende Bohrungsabschnitte 12a und 12b auf, von denen der Bohrungsabschnitt 12a an der Außenseite des Bauteils 10 endet und einen gegenüber dem innenliegenden Bohrungsabschnitt 12b größeren Innendurchmesser hat. Der Übergang vom Bohrungsabschnitt 12a zum Bohrungsabschnitt 12b ist als rechtwinklige Schulter 16 ausgebildet, an der das Stromregelventil 14 anliegt.

Der Stutzen 18 weist einen umlaufenden Bund 20 auf, mit dem er sich am Bauteil 10 abstützt. Im Stutzen 18 ist ein Druckmittelkanal 24 ausgebildet, durch den ein Druckmittel von bzw. zu einem nicht gezeichneten Verbraucher A strömt.

Die in der Figur eingezeichneten Richtungspfeile R deuten eine vom Verbraucher A kommende Flußrichtung des Druckmittels an, aufgrund der das Stromregelventil 14 gegen die Schulter 16 der Stufenbohrung 12 gedrückt ist. Das Druckmittel fließt durch das Stromregelventil 14 hindurch zu einer mit dem zweiten Bohrungsabschnitt 12b in Verbindung stehenden, jedoch nicht dargestellten und mit P bezeichneten hydraulischen Einrichtung.

Das Stromregelventil 14 besteht aus einem ersten als Ventilkörper 26 und einem zweiten, als Regelblende 28 bezeichneten Bauteil, wobei insbesondere die Regelblende 28 erfindungsgemäß scheibenförmig ausgeführt ist und die Querschnittsfläche des Bohrungsabschnitts 12b mit Ausnahme einer Blendenöffnung überdeckt. Zwischen dem Ventilkörper 26 und der Regelblende 28 ist eine Tellerfeder 30 angeordnet, die einen von den Druckverhältnissen in den verschiedenen Bohrungsabschnitten 12a, 12b abhängigen Arbeitsspalt 40 zwischen beiden Bauteilen einstellt. Der Ventilkörper 26 ist mit einer Durchgangsbohrung versehen, die als Meßblende 32 wirkt. Diese ist exzentrisch versetzt zur Mittelachse des Ventilkörpers 26 angeordnet und weist mit der Blendenöffnung der Regelblende 28, welche konzentrisch zur Mittelachse des zweiten Bauteils liegt, keine Überdeckung auf.

Am Umfang des Ventilkörpers 26 sind Abstandshalter 34 vorgesehen, die sich in die von der Regelblende 28 abgewandte Richtung erstrecken und die eine Abstützung des Stromregelventils 14 an der Wandung des Stutzens 18 erlauben, so bald die Durchströmung des Stromregelventils 14 entgegen der durch die Richtungspfeile R angedeuteten Strömungsrichtung erfolgt. Die Abstandshalter 34 sind vom Druckmittel umströmt und gewährleisten einen ungehinderten Druckmittelfluß von P nach A, ohne daß das Stromregelventil 14 dabei durchströmt wird.

Im Zentrum des Ventilkörpers 26 ist an der, der Regelblende 28 zugewandten Seite, ein Ventilelement 36 angeordnet. Diese Ventilelement 36 ist als Zapfen mit einer im wesentlichen konischen Außenkontur ausgebildet und dringt zumindest abschnittsweise in die Blendenöffnungen der gegenüberliegenden Regelblende 28 ein. Abhängig vom Arbeitsspalt 40 zwischen dem Ventilkörper 26 und der Regelblende 28 bestimmt das Ventilelement 36 somit den Druckmittelstrom durch die Regelblende 28.

Bei der Durchströmung des Stromregelventils 14 in der durch die Richtungspfeile R angedeuteten Richtung, d.h. vom Verbraucher A zur Einrichtung P, entsteht an der Meßblende 32 ein Druckgefälle. Die daraus resultierende Druckkraft drückt den Ventilkörper 26 in Richtung der Regelblende 28. Dabei wirkt dieser Druckkraft die Kraft der Tellerfeder 30 entgegen, bis sich ein Gleichgewichtszustand einstellt. Dieser bestimmt die Eindringtiefe des Ventilelements 36 in die Öffnung der Regelblende 28 und damit die Menge des in den Bohrungsabschnitt 12b pro Zeiteinheit strömenden Druckmittels.

Erhöht sich der Druck am Verbraucher A, beispielsweise durch eine zunehmende Last, dringt das Ventilelement 36 weiter in die Öffnung der Regelblende 28 ein und verkleinert dadurch deren freien Strömungsquerschnitt. Das erhöhte Druckniveau in Verbindung mit dem kleineren Strömungsquerschnitt hat einen konstanten Druckmittelstrom im Bohrungsabschnitt 12b zur Folge.

Ändert sich die Strömungsrichtung, d.h. fließt das Druckmittel entgegen der in Figur 1 angedeuteten Richtung, hebt das Stromregelventil 14 zunächst von der Schulter 16 der Stufenbohrung 12 ab, gibt dadurch den gesamten Querschnitt des Bohrungsabschnitts 12b frei und legt sich über die Abstandshalter 34 an der Wandung des Stutzens 18 an. Um diesen Ortswechsel des Strömungsventils zu ermöglichen, muß der vom Stutzen 18 und der Schulter 16 begrenzte und das Stromregelventil 14 aufnehmende Einbauraum sowohl in axialer als auch in radialer Richtung größer dimensioniert sein, als es die Außenabmessungen des Stromregelventils 14 sind. Die Tellerfeder 30 drückt dabei den Ventilkörper 26 und die Regelblende 28 auseinander, so daß eine erste Druckmittelverbindung zwischen den Bohrungsabschnitten 12a und 12b über die Regelblende 28 und die Meßblende 32 besteht. Eine zweite Druckmittelverbindung, als Bypaß zur Regelblende 28 wird vom entstehenden Spalt zwischen der Regelblende 28 und der Stufe 16 der Stufenbohrung 12 gebildet. Dieser Spalt ist über den Umfangsbereich des Stromregelventils 14 hydraulisch mit dem Bohrungsabschnitt 12a verbunden. Beide Druckmittelverbindungen gewährleisten einen in diese Flußrichtung vernachlässigbar kleinen Strömungswiderstand des Stromregelventils 14.

Figur 2 zeigt ein zweites Ausführungsbeispiel eines Stromregelventils 14, das insbesondere durch seine einteilige Bauweise besonders kostengünstig herstellbar ist. In der nachfolgenden Beschreibung wurde für die entsprechend zum Ausführungsbeispiel 1 wirkenden Bauteile identische Bezeichnungen und Positionsnummern verwendet.

Der Ventilkörper 26 und die Regelblende 28 sind vergleichbar zum Ausführungsbeispiel nach Figur 1 als scheibenförmige Bauteile ausgebildet und weisen eine exzentrisch plazierte Meßblende 32 und eine zentrisch angeordnete Blendenöffnung auf. Das in diese Blendenöffnung hineinragende Ventilelement 36 ist beispielsweise mit Hilfe eines Prägevorgangs am Ventilkörper 26 angeformt. Mit einem solchen Verfahren sind auch die Abstandshalter 34 am Ventilkörper 26 ausbildbar. Die Tellerfeder 30 ist im Ausführungsbeispiel 2 durch Stege 38 ersetzt, die - angeordnet am Umfang des Stromregelventils 14 - den Ventilkörper 26 und die Regelblende 28 miteinander verbinden. Diese Stege 38 erstrecken sich segmentartig nur über einen Teil des gesamten Umfangs des Stromregelventils 14 und erlauben Relativbewegungen zwischen dem Ventilkörper 26 und der Regelblende 28. Vorteilhafterweise wird ein derartiges Stromregelventil 14 in einem Mehrstufenwerkzeug aus einer Platine ausgestanzt, geprägt und in einem Biegearbeitsgang in seine dargestellte Form gebracht.

In dem in Figur 3 dargestellten, dritten Ausführungsbeispiel eines Stromregelventil 14, ist der Ventilkörper 26 aus einem topfförmigen Bauteil gefertigt, dessen Material und konstruktive Ausgestaltung eine elastische Durchbiegung seines Bodenbereichs erlaubt. In das Innere dieses Ventilkörpers 26 ist eine scheibenförmige Regelblende 28 derart eingesetzt, daß zwischen der Innenfläche des Ventilkörpers 26 und der der Regelblende 28 ein Arbeitsspalt 40 verbleibt. Letzterer ist auf die maximal mögliche Durchbiegung des Ventilkörpers 26 abzustimmen. Aufgrund der Elastizität des Ventilkörpers 26 kann auf eine separate Feder 30 verzichtet werden. Zur Ausbildung der Abstandshalter 34 und der Ventilelemente 36 am Ventilkörper 26 wird auf die in Bezug auf das zweite Ausführungsbeispiel gemachten Angaben verwiesen.

Das in Figur 4 der Vollständigkeit halber dargestellte Schaltsymbol zeigt das, zwischen eine Einrichtung P und einen Verbraucher A geschaltete Stromregelventil 14 in einer vereinfachten Darstellung. Dieses Stromregelventil 14 ist so geschaltet, daß es in der durch den Richtungspfeil R angedeuteten Durchströmungsrichtung als Blende wirkt, die den Druckmittelstrom zur Einrichtung P auf einen mengenmäßig konstanten Wert regelt. Dieser Wert ist unabhängig vom Druckniveau in der zum Verbraucher A führenden Leitung. Parallel zu dieser Blende ist ein Rückschlagventil 42 in einen Bypaß 44 geschaltet. Das Rückschlagventil 42 verhindert einen Druckmittelfluß vom Verbraucher A zur Einrichtung P, ist jedoch in der Gegenrichtung geöffnet, so daß von P nach A die eingezeichnete Blende keinen wirksamen Strömungswiderstand darstellt.

Selbstverständlich sind Änderungen oder Ergänzungen an den beschriebenen Ausführungsbeispielen möglich, ohne vom Grundgedanken der Erfindung abzuweichen.

## Patentansprüche

1. Stromregelventil (14) mit einem zwischen einer Zulaufund einer Ablaufbohrung angeordneten und gegen die Kraft einer Rückstelleinrichtung (30) verschiebbaren Ventilkörper (26), der mit wenigstens einer vom Medium durchströmten Meßblende (32) versehen ist und der zur Steuerung eines konstanten, vom jeweils wirkenden Druck unabhängigen Druckmittelflusses mit einer Regelblende (28) zusammenwirkt, **dadurch gekennzeichnet, daß** die Regelblende (28) als scheibenförmiges Bauteil ausgebildet ist, das die Ablaufbohrung mit Ausnahme von Blendenöffnungen der Regelblende überdeckt und daß der Ventilkörper (26) Ventilglieder (36) umfaßt, die in diese Blendenöffnungen wenigstens abschnittsweise hineinragen.

2. Stromregelventil nach Anspruch 1, **dadurch gekennzeichnet, daß** die Rückstelleinrichtung eine Tellerfeder (30) ist.

3. Stromregelventil nach Anspruch 1, **dadurch gekennzeichnet, daß** der Ventilkörper (26), die Regelblende (28) und die Rückstelleinrichtung (30) einteilig miteinander ausgebildet sind.

4. Stromregelventil nach Anspruch 1, **dadurch gekennzeichnet, daß** der Ventilkörper (26) topfförmig ausgebildet ist und eine zum Druck im Medium proportionale Durchbiegung seiner Bodenfläche erlaubt, daß der Ventilkörper (26) in seinem Inneren die Regelblende (28) aufnimmt und daß zwischen der Innenseite dieser Regelblende (28) und der des Ventilkörpers (26) ein Arbeitsspalt (40) besteht.

5. Stromregelventil nach einem der Ansprüche 1 bis 4, **dadurch gekennzeichnet, daß** der Ventilkörper (26) auf seiner von der Rückstelleinrichtung (30) abgewandten Außenseite Abstandshalter (34) aufweist, die vom Medium umspült sind.

6. Stromregelventil nach einem der Ansprüche 1 bis 5, **dadurch gekennzeichnet, daß** die Drosselelemente (36) des Ventilkörpers (26) Zapfen mit einer konischen Außenkontur sind.

7. Stromregelventil nach einem der Ansprüche 1 bis 6, **dadurch gekennzeichnet, daß** die Ventilglieder (36) und/oder die Abstandshalter (34) mittels eines plastischen Formgebungsverfahrens einteilig am Ventilkörper (26) ausgebildet sind.

8. Stromregelventil nach einem der Ansprüche 1 bis 7, **dadurch gekennzeichnet, daß** die Meßblende (32) exzentrisch zur Mittelachse des Ventilkörpers (26) angeordnet ist, daß die Blendenöffnung konzentrisch zur Mittelachse der Regelblende (28) liegt und daß die Meßblende (32) und die Blendenöffnung der Regelblende (28) keinen gemeinsamen Überdeckungsbereich aufweisen.

9. Aggregat zur Versorgung eines Hebezeugs mit hydraulischem Druckmittel, bei dem in einer Druckmittelleitung ein Stromregelventil (14) nach einem der Ansprüche 1 bis 8 angeordnet ist.

## Claims

1. Flow-regulating valve (14), with a valve body (26) which is arranged between an inflow bore and an outflow bore and is displaceable counter to the force of a restoring device (30) and which is provided with at least one measuring diaphragm (32) having a throughflow of the medium and which cooperates with a regulating diaphragm (28) in order to control a constant pressure-medium flow independent of the pressure acting in each case, **characterized in that** the regulating diaphragm (28) is designed as a disc-shaped component which covers the outflow bore, with the exception of diaphragm orifices of the regulating diaphragm, and **in that** the valve body (26) comprises valve members (36) which project at least partially into these diaphragm orifices.

2. Flow-regulating valve according to Claim 1, **characterized in that** the restoring device is a cup spring (30).

3. Flow-regulating valve according to Claim 1, **characterized in that** the valve body (26), the regulating diaphragm (28) and the restoring device (30) are produced in one piece with one another.

4. Flow-regulating valve according to Claim 1, **characterized in that** the valve body (26) has a pot-shaped design and allows a flexion of its bottom surface which is proportional to the pressure in the medium, **in that** the valve body (26) receives the regulating diaphragm (28) inside it, and **in that** there is a working gap (40) between the inside of this regulating diaphragm (28) and that of the valve body (26).

5. Flow-regulating valve according to one of Claims 1 to 4, **characterized in that** the valve body (26) has, on its outside facing away from the restoring device (30), spacers (34), around which the medium is washed.

6. Flow-regulating valve according to one of Claims 1 to 5, **characterized in that** the throttle elements (36) of the valve body (26) are pins having a conical outer contour.

7. Flow-regulating valve according to one of Claims 1 to 6, **characterized in that** the valve members (36) and/or the spacers (34) are produced in one piece on the valve body (26) by means of a plastic shaping method.

8. Flow-regulating valve according to one of Claims 1 to 7, **characterized in that** the measuring diaphragm (32) is arranged eccentrically to the mid-axis of the valve body (26), **in that** the diaphragm orifice lies concentrically to the mid-axis of the regulating diaphragm (28), and **in that** the. measuring diaphragm (32) and the diaphragm orifice of the regulating diaphragm (28) do not have a common overlapping region.

9. Assembly for supplying a lifting appliance with hydraulic pressure medium, in which a flow-regulating valve (14) according to one of Claims 1 to 8 is arranged in a pressure-medium line.

## Revendications

1. Soupape de régulation de débit (14) comportant un corps de soupape (26) disposé entre un perçage d'arrivée et un perçage d'évacuation et pouvant coulisser contre la force d'un dispositif de rappel (30), corps de soupape pourvu d'au moins un obturateur de mesure (32) traversé par le flot du milieu ambiant et qui agit avec un obturateur de régulation (28) pour commander un débit de liquide hydraulique constant, indépendant de la pression régnant à ce moment,
**caractérisée en ce que**
l'obturateur de régulation (28) est constitué en tant que pièce en forme de plaque qui recouvre le perçage d'évacuation à l'exception d'ouvertures d'obturateur de l'obturateur de régulation, et le corps de soupape (26) comprend des éléments de soupape (36) qui pénètrent au moins par section dans ces ouvertures d'obturateur.

2. Soupape de régulation de débit selon la revendication 1,
**caractérisée en ce que**
le dispositif de rappel est un ressort en coupelle (30).

3. Soupape de régulation de débit selon la revendication 1,
**caractérisée en ce que**
le corps de soupape (26), l'obturateur de régulation (28) et le dispositif de rappel (30) sont constitués de manière monobloc.

4. Soupape de régulation de débit selon la revendication 1,
**caractérisée en ce que**
le corps de soupape (26) est en forme de pot et autorise une flexion de sa surface de fond proportionnelle à la pression du milieu, le corps de soupape (26) reçoit à l'intérieur l'obturateur de régulation (28) et entre le côté intérieur de cet obturateur de régulation (28) et celui du corps de soupape (26) existe une fente de travail (40).

5. Soupape de régulation de débit selon l'une quelconque des revendications 1 à 4,
**caractérisée en ce que**
le corps de soupape (26) sur son côté extérieur détourné du dispositif de rappel (30) présente des écarteurs (34) plongés dans le milieu.

6. Soupape de régulation de débit selon l'une quelconque des revendications 1 à 5,
**caractérisée en ce que**
les organes d'étranglement (36) du corps de soupape (26) sont des tourillons possédant un contour extérieur conique.

7. Soupape de régulation de débit selon l'une quelconque des revendications 1 à 6,
**caractérisée en ce que**
les organes de soupape (36) et/ou les écarteurs (34) sont rapportés par formage de manière monobloc au corps de soupape (26) au moyen d'un procédé de mise en forme plastique.

8. Soupape de régulation de débit selon l'une quelconque des revendications 1 à 7,
**caractérisée en ce que**
l'obturateur de mesure (32) est disposé de façon excentrique par rapport à l'axe central du corps de soupape (26), l'ouverture d'obturateur est concentrique par rapport à l'axe central de l'obturateur de régulation (28), et l'obturateur de mesure (32) et l'ouverture d'obturateur de l'obturateur de régulation (28) ne présentent pas de zone de recouvrement commune.

9. Ensemble pour l'alimentation en liquide hydraulique d'un appareil de levage dans lequel, une soupape de régulation de débit (14) selon l'une quelconque des revendications 1 à 8 est disposée dans une canalisation de liquide hydraulique.
